# EUROPÄISCHE PATENTANMELDUNG

(11) **EP 4 350 141 A1**
(43) Veröffentlichungstag der Anmeldung: **10.04.2024**
(21) Anmeldenummer: 23202278.0
(22) Anmeldetag: 06.10.2023
(51) Int. Cl.: F03D 1/06

(54) **ROTOR FÜR EINE WINDENERGIEANLAGE, WINDENERGIEANLAGE UND ROTORMODUL**

(30) Priorität: 06.10.2022 DE 102022125857
(71) Anmelder: J. A. Wolpmann Beteiligungsverwaltungs UG (haftungsbeschränkt), 49076 Osnabrück (DE)
(72) Erfinder: Gelhart, Karl-Michael, 21439 Marxen (DE)
(74) Vertreter: Haarpatent Patentanwälte Krämer Meyer

(57) **Zusammenfassung**

Die Erfindung betrifft einen Rotor (2) für eine Windenergieanlage (1) umfassend eine zentralen Rotornabe (20), die eine Rotorachse (22) vorgibt, und eine um die Rotornabe (20) herum angeordneten Rotorscheibe (26) mit einer Vielzahl von Strömungskanälen, wobei die Strömungskanäle jeweils durch Strömungsflächen (272) mit radial ausgerichteter Vorderkante und Leitflächen (274) mit in Umfangsrichtung angerichteter Vorderkante gebildet werden, wobei die Strömungsflächen (272) schräg zur Rotorachse (22) ausgerichtet sind, um bei Anströmung des Rotors (2) im Wind ein Drehmoment um die Rotorachse (22) zu bewirken.

Der erfindungsgemäße Rotor (2) ist dadurch weitergebildet, dass die Rotorscheibe (26) aus im Wesentlichen kreissegmentförmigen Rotormodulen (27, 27') aufgebaut ist, wobei die Rotormodule (27, 27') jeweils an der Rotornabe (20) befestigt und benachbarte Rotormodule (27, 27') miteinander verbunden sind.

Die Erfindung betrift des Weiteren eine Windenergieanlage (1) mit einem erfindungsgemäßen Rotor (2) sowie ein Rotormodul (27, 27') für einen erfindungsgemäßen Rotor (2)

## Beschreibung

Die Erfindung betrifft einen Rotor für eine Windenergieanlage umfassend eine zentralen Rotornabe, die eine Rotorachse vorgibt, und eine um die Rotornabe herum angeordneten Rotorscheibe mit einer Vielzahl von Strömungskanälen, wobei die Strömungskanäle jeweils durch Strömungsflächen mit radial ausgerichteter Vorderkante und Leitflächen mit in Umfangsrichtung angerichteter Vorderkante gebildet werden, wobei die Strömungsflächen schräg zur Rotorachse ausgerichtet sind, um bei Anströmung des Rotors im Wind ein Drehmoment um die Rotorachse zu bewirken.

Die Erfindung betrifft des Weiteren eine Windenergieanlage sowie ein Rotormodul.

Für große Windenergieanlagen im Leistungsbereich über mehreren hundert Kilowatt haben sich weitestgehend Systeme mit in der Regel drei verstellbaren Flügeln, die strömungsoptimierte Profile aufweisen, als besonders vorteilhaft erwiesen. Hauptaugenmerk liegt dabei auf möglichst effizienten Anlagen, die oft in Windparks mit Netzeinspeisung aufgestellt und auf maximalen Ertrag optimiert werden.

Die dabei angewandten Optimierungsansätze führen jedoch in der Regel zu besonders großen und entsprechend teuren Anlagen. Bei kleineren Anlagen für dezentrale Stromgewinnung oder Insellösungen ist hingegen bei gegebenem Energiebedarf eine niedrige Investitionssumme ausschlaggebend, so dass unter Umständen auch weniger effiziente, aber günstigere Konzepte als die Standarddreiflügelkonfiguration wirtschaftlich interessant sind. Unter anderem wurden dafür gattungsbildende Anlagen der eingangs genannten Art vorgeschlagen. Derartige Rotoren kommen ohne aufwändig aerodynamisch ausgelegte Flügelprofile auf, weisen jedoch einen vergleichsweise komplexen Aufbau aus vielen Einzelteilen auf.

Der Erfindung liegt die Aufgabe zugrunde, für derartige Anlagen eine möglichst einfache und kostengünstige Konstruktionsweise zu entwickeln.

Gelöst wird die Aufgabe durch einen Rotor für eine Windenergieanlage umfassend eine zentralen Rotornabe, die eine Rotorachse vorgibt, und eine um die Rotornabe herum angeordneten Rotorscheibe mit einer Vielzahl von Strömungskanälen, wobei die Strömungskanäle jeweils durch Strömungsflächen mit radial ausgerichteter Vorderkante und Leitflächen mit in Umfangsrichtung angerichteter Vorderkante gebildet werden, wobei die Strömungsflächen schräg zur Rotorachse ausgerichtet sind, um bei Anströmung des Rotors im Wind ein Drehmoment um die Rotorachse zu bewirken, der dadurch weitergebildet ist, dass die Rotorscheibe aus im Wesentlichen kreissegmentförmigen Rotormodulen aufgebaut ist, wobei die Rotormodule jeweils an der Rotornabe befestigt und benachbarte Rotormodule miteinander verbunden sind.

Ein wesentlicher Vorteil der Erfindung besteht darin, dass die Rotormodule in geeigneten Werkstattumgebungen vormontiert werden können und dennoch einfach zum Aufstellungsort einer Windenergieanlage transportiert werden können, um dort mit relativ wenig Aufwand zum Gesamtrotor zusammengebaut zu werden. Im Gegensatz zur Vormontage des Gesamtrotors, der in der Regel mehrere Meter Durchmesser aufweist, entfallen somit aufwändige Sondertransporte, falls die Größe des Rotors diese Option nicht von Anfang an verbietet. Im Gegensatz zum Aufbau des Rotors aus Einzelteilen am Aufstellungsort der Windenergieanlage hingegen verringert sich die schwierige und wetterabhängige Montagezeit im Freien, was die Aufstellung erheblich beschleunigt und die damit verbundenen Kosten erheblich reduziert.

Der erfindungsgemäße Rotor weist insbesondere eine dem Wind zugewandte Vorderseite und eine dem Wind abgewandte Rückseite auf, wobei sich die Strömungskanäle insbesondere von der Vorderseite zur Rückseite des Rotors erstrecken. Die von Vorderseite und Rückseite des Rotors umschriebenen Flächen sind vorzugsweise deckungsgleich und im Wesentlichen kreisförmig oder polygonal.

Ein weiterer Vorteil der Erfindng besteht darin, dass die Rotormodule in Serienfertigung und unter Einsatz geeigneter, auch großer und stationärer Werkzeugmaschinen, hergestellt werden können, so dass die Stückkosten durch Skaleneffekte deutlich reduziert werden können. Hierzu ist des Weiteren von Vorteil, wenn die Rotormodule wenigstens teilweise baugleich sind. Beispielsweise ist im Rahmen der Erfindung denkbar, dass für alle Rotormodule eines Rotors lediglich drei oder weniger unterschiedliche Bauformen vorgesehen sind.

Im Rahmen der Erfindung ist grundsätzlich eine lösbare Verbindung der Rotormodule untereinander und/oder eine lösbare Befestigung der Rotormodule an der Rotornabe von Vorteil, um gegebenenfalls ein beschädigtes Rotormodul schnell und einfach tauschen oder zur Reparatur ausbauen zu können.

Eine bevorzugte Ausführungsform der Erfindung ist dadurch ausgezeichnet, dass die Rotormodule jeweils randständige Träger aufweisen. Dadurch wird ausreichende Eigenstabilität der einzelnen Rotormodule gewährleitet, um beispielsweise einen hochkant liegenden Transport zu ermöglichen.

Außerdem wird eine einfache und feste Verbindung der Rotormodule im Rotor ermöglicht, indem benachbarte Rotormodule über die Träger miteinander verbunden sind. Die randständigen Träger der beiden benachbarten Module sind dabei vorzugsweise entlang ihrer Länge aneinanderstoßend angeordnet und ermöglichen so eine einfache und dauerhafte Verbindung, beispielsweise mittels verschrauben, vernieten oder verschweißen der beiden Träger.

Beispielsweise weist jedes Rotormodul vier Träger auf, die jeweils paarweise an der Modulvorderseite und der Modulhinterseite, jeweils bezogen auf die bestimmungsgemäße Anströmrichtung entlang der Rotorachse bei bestimmungsgemäßem Einbau in den erfindungsgemäßen Rotor.

Die Träger sind dabei vorzugsweise als langgestreckte Trägerprofile ausgebildet. Denkbar sind beispielsweise bekannte L-, T-, Doppel-T- Rund- oder Rechteckprofile, die bekanntermaßen einfach und kostengünstig aus allen geeigneten Materialien und in erforderlicher Länge herstellbar sind.

Eine besonders einfache und kostengünstige Bereitstellung des Rotors wird weiter begünstigt, wenn die Strömungsflächen und/oder die Leitflächen durch Flachbleche ausgebildet werden. Hier bieten sich insbesondere Flachbleche aus einem Metallwerkstoff an, die im bekannten Blechbiegeverfahren einfach, kostengünstig und mit hoher Präzision in die gewünschte Form gebracht werden können. Beispielsweise ist so problemlos die Bereitstellung abgewinkelter Laschen möglich, mittels derer quer zueinander stehende Flächen, beispielsweise eine Leitfläche und eine Strömungsfläche, sicher und dauerhaft miteinander verbunden werden können.

Die Rotormodule sind bevorzugt an der Rotornabe durch geeignete Spannmittel gesichert, um in Richtung der Rotorachse auf die Rotormodule einwirkende Winddruckkräfte wenigstens teilweise aufzunehmen und an die Rotornabe abzuleiten. Gerade bei größeren Rotoren gemäß der Erfindung, bei denen die Module eine radiale Länge von mehreren Metern aufweisen, ist mit erheblichem Winddruck entlang der Rotorachse, also quer zur Hauptebene des Rotors, zu rechnen. Die erfindungsgemäßen Spannmittel entlasten dabei die Befestigung der Rotormodule an der Rotornabe und erlauben so eine einfache, kostengünstige und dennoch sichere Auslegung.

Im Rahmen der Erfindung geeignete Spannmittel sind beispielsweise Spannseile, die von der Rotornabe beabstandet an den Rotormodulen angreifen und einerseits nach radial innen, andererseits schräg zur Rotorachse dem Wind entgegen verlaufen zur Rotornabe hin verlaufen. Hierfür weist die Rotornabe vorzugsweise eine über die Rotorscheibe hinausstehende, druckstabile Verlängerung parallel zur Rotorachse auf, an der die Spannseile angeschlagen werden können.

Die der Erfindung zugrunde liegende Aufgabe wird auch gelöst durch eine Windenergieanlage mit einem erfindungsgemäßen Rotor.

Wenn die Windenergieanlage ein in bestimmungsgemäßer Anströmrichtung hinter dem Rotor angeordnetes Maschinenhaus umfasst, weist die bevorzugt Rotornabe einen Querschnitt auf, der größer ist als ein dem anströmenden Wind bestimmungsgemäß zugewandter Querschnitt des Maschinenhauses. Dadurch wird verhindert, dass sich der anströmende Wind zwischen Rotor und Maschinenhaus anstaut, so dass die den Rotor durchströmende Luft frei abströmen kann.

Besonders vorteilhaft ist es zudem, wenn die Rotornabe eine strömungsleitende Vorderseite aufweist, um den anströmenden Wind nach radial außen in den Bereich der Rotorscheibe abzuleiten. Dadurch wird zumindest in den radial inneren Strömungskanälen die Strömungsgeschwindigkeit und somit die Energieausbeute erhöht. Hierbei kann es sich beispielsweise um ein kegelförmige oder abgerundete Spitze handeln, die rotationssymmetrisch zur Rotorachse geformt ist und sich wenigstens teilweise über den dem Wind zugewandten Querschnitt der Rotornabe erstreckt.

Die der Erfindung zugrunde liegende Aufgabe wird des Weiteren gelöst durch ein Rotormodul für einen erfindungsgemäßen Rotor.

Die Erfindung wird nachfolgend anhand eines Ausführungsbeispiels näher erläutert, das in der Zeichnung dargestellt ist. Es zeigen:
- Figur 1a: schematisch eine beispielhafte Windenergieanlage gemäß der Erfindung in perspektivischer Ansicht,
- Figur 1b: schematisch eine Seitenansicht der erfindungsgemäßen Windenergieanlage aus Fig. 1a,
- Figur 2: schematisch einen exemplarischen Rotor gemäß der Erfindung für die erfindungsgemäße Windenergieanlage aus Fig. 1a und 1b sowie
- Figur 3: schematisch ein exemplarisches Rotormodule erster Bauart gemäß der Erfindung und ein exemplarisches Rotormodul zweiter Bauart gemäß der Erfindung für den erfindungsgemäßen Rotor aus Fig. 2.

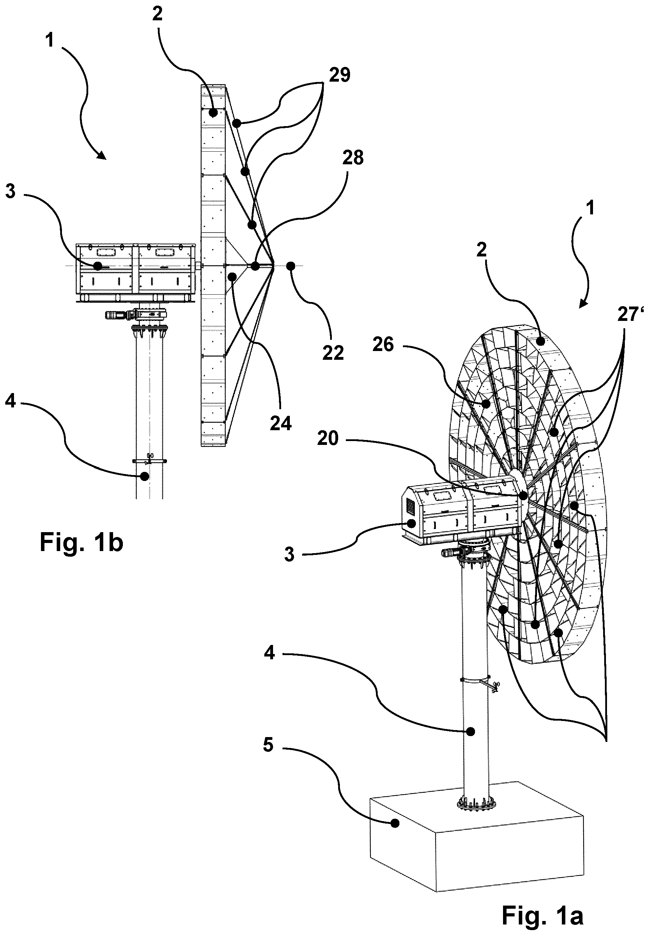

Ein Ausführungsbeispiel für eine erfindungsgemäße Windenergieanlage 1 ist in den Figuren 1a und 1b dargestellt, wobei Fig. 1a schematisch eine perspektivische Ansicht und Fig. 1b schematisch eine Seitenansicht zeigt.

Die erfindungsgemäße Windenergieanlage 1 umfasst einen Rotor 2, der um eine in Fig. 1b als gestrichelte Linie dargestellte Rotorachse 22 drehbar gelagert ist. In bestimmungsgemäßer Anströmrichtung hinter dem Rotor 2 ist ein Maschinenhaus 3 vorgesehen, dass beispielsweise einen mit dem Rotor 2 gekoppelten Antriebsstrang mit Antriebswelle, Generator, Lagern und gegebenenfalls einem Getriebe enthalten kann.

Im dargestellten Ausführungsbeispiel ist das Maschinenhaus 3 mit dem Rotor 2 auf einem Turm 4 angeordnet und kann zur Ausrichtung des Rotors 2 zum Wind um die Hochachse des Turms 4 gedreht werden. Der Turm 4 ist geeignet gegründet, beispielsweise auf einem schematisch dargestellten Fundament 5. Je nach Größe der Windenergieanlage 1 ist im Rahmen der Erfindung jedoch auch eine andere Aufstellung denkbar, beispielweise auf Gebäuden oder an bestehenden Masten.

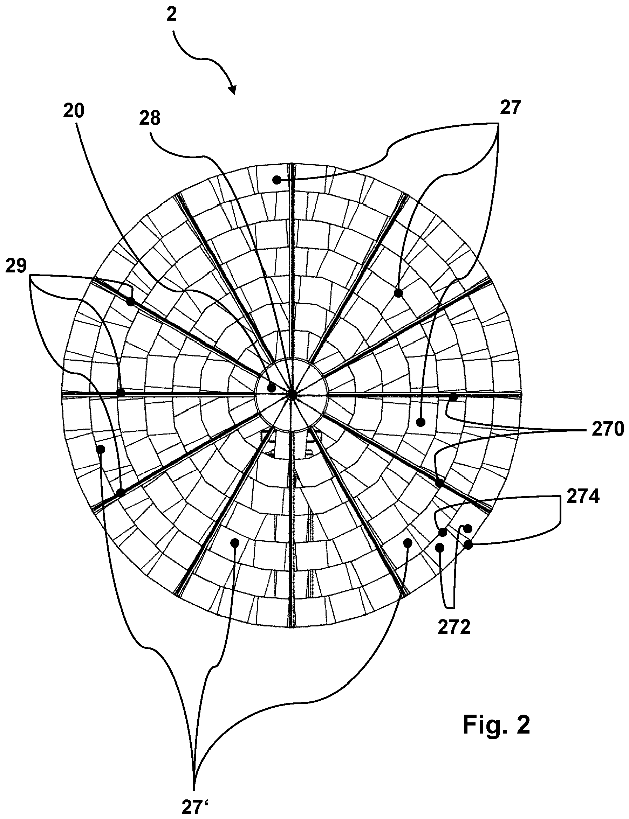

Eigenständigen erfinderischen Gehalt weist der Rotor 2 der erfindungsgemäßen Windenergieanlage 1 auf. Weitere Details zu dem exemplarischen Rotor 2 gemäß der Erfindung sind aus einer schematischen Draufsicht ersichtlich, die in Fig. 2 dargestellt ist.

Der Rotor 2 weist eine Rotornabe 20 auf, die im Zentrum einer Rotorscheibe 26 angeordnet ist. Die Rotorscheibe 26 wird aus einer mehreren Rotormodulen 27, 27' gebildet, die einerseits an der Rotornabe 20 befestigt und andererseits mit den beiden benachbarten Rotormodulen 27, 27' verbunden sind. Für eine bessere Übersichtlichkeit der Zeichnungen sind nur einige der insgesamt zwölf dargestellten Rotormodule 27, 27' mit Bezugszeichen versehen.

Die Rotornabe 20 weist eine kegelförmige Kappe 24 auf, um den anströmende Wind aus dem Zentrum des Rotors 2 möglichst widerstandsarm nach radial außen zu der Rotorscheibe 26 hin abzulenken. Dabei ist die Querschnittsfläche der Rotornabe 22 so gewählt, dass gleichzeitig auch das dahinter liegende Maschinenhaus 3 abgeschirmt wird, so dass sowohl vor der Rotornabe 22 als auch zwischen Rotor 2 und Maschinenhaus 3 hinderliches Aufstauen der strömenden Luft vermieden wird.

Bei bestimmungsgemäßer Anströmung des Rotors 2 wirken auf die Rotorscheibe 26 unweigerlich Druckkräfte etwa entlang der Rotorachse 22, die unter anderem die Befestigungen der Rotormodule 27, 27' an der Rotornabe 20 stark belasten können. Gerade bei vergleichsweise großen Rotoren ist es daher vorteilhaft, diese Befestigungen zu entlasten, wozu im dargestellten Ausführungsbeispiel schräg verlaufende Spannseile 29 vorgesehen sind. Für eine bessere Übersichtlichkeit der Zeichnungen sind nur einige der insgesamt zwölf dargestellten Spannseile 29 mit Bezugszeichen versehen.

Die Spannseile 29 verlaufen in radialer Richtung vom äußeren Umfang der Rotorscheibe 26 zur Rotorachse 22 und sind gleichmäßig über den Umfang verteilt angeordnet, so dass sich radiale Zugkräfte kompensieren. Um Kräfte entlang der Rotorachse 22 aufnehmen zu können, weist die Rotornabe 20 eine axial angeordnete, druckstabile Stützstange 28 auf, an deren Spitze die Spannseile 29 angeschlagen sind.

Im konkret beschriebenen Ausführungsbeispiel eines erfindungsgemäßen Rotors 2 sind in der Rotorscheibe 26 zwölf Rotormodule 27, 27' vorgesehen. Dadurch ergibt sich beispielsweise bei einem Rotordurchmesser von 10 m für die Rotormodule 27, 27' eine maximale Breite von etwa 2,5 m bei einer Länge von unter 5 m. Die Tiefe der Rotormodule 27, 27' entspricht dabei der Tiefe der Rotorscheibe 26 und beträgt in der Regel deutlich weniger als die maximale Breite oder die Länge. Diese Maße sind problemlos mit Standardlastkraftwagen transportierbar, je nach Ausführung des Lastkraftwagens oftmals sowohl flach liegend als auch hochkant geladen.

Allgemein ist im Rahmen der Erfindung die Anzahl der Rotormodule 27, 27' vorzugsweise danach bemessen, dass die maximale Breite der einzelnen Rotormodule 27, 27' mit den für Standardlastkraftwagen vorgeschriebenen Abmessungsgrenzen für Breite und Höhe kompatibel bleibt. Entsprechend haben erfindungsgemäße Rotoren 2 mit größerem Durchmesser in der Regel mehr Rotormodule 27, 27' als solche mit kleinerem Durchmesser.

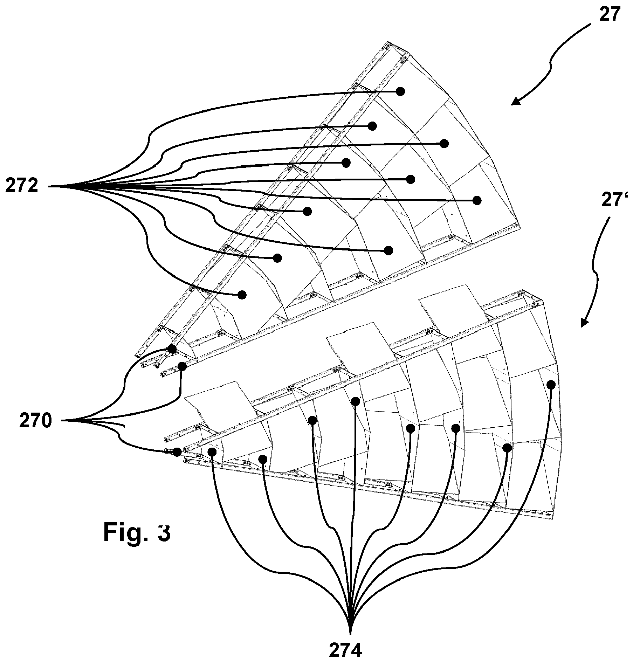

Der exemplarisch gezeigte erfindungsgemäße Rotor 2 weist eine sechsfache Rotationssymmetrie auf, so dass insgesamt nur zwei verschiedene Bautypen für die Rotormodule 27, 27' vorkommen, die in Umfangsrichtung des Rotors 2 abwechselnd verbaut sind. Ein exemplarisches, erfindungsgemäßes Rotormodul 27 des einen Bautyps sowie ein exemplarisches, erfindungsgemäßes Rotormodul 27` des anderen Bautyps sind schematisch in Fig. 3 dargestellt.

Die Rotormodule 27; 27' umfassen jeweils vier randständige Träger 270, die im kompletten Rotor 2 im Wesentlichen radial verlaufen. Für eine bessere Übersichtlichkeit der Zeichnungen sind nicht alle dargestellten Träger 270 mit Bezugszeichen versehen.

Die Träger 270 sind maßgeblich für die mechanische Stabilität der Rotormodule 27, 27' verantwortlich, so dass die Rotormodule 27, 27' vorzugsweise mit den Trägern 270 an der Rotornabe 20 befestigt sind. Aus demselben Grund sind vorzugsweise benachbarte Rotormodule 27, 27' dadurch miteinander verbunden, dass die nebeneinander angeordneten Träger 270 der entsprechenden Rotormodule 27, 27' miteinander verbunden werden. Hierfür ist im Rahmen der Erfindung jegliche geeignete Verbindungstechnik denkbar, wobei lösbare Verbindungen in ausgewählten Einzelfällen von Vorteil sein können.

Insofern Spannseile 29 oder sonstige Spannmittel zum Ableiten von axialen Druckkräften vorgesehen sind, ist es außerdem von Vorteil, wenn die Spannseile 29 oder Spannmittel in axialer Projektion zu den Trägern 270 verlaufen. Auf diese Weise können Biege- und/oder Torsionsbelastungen innerhalb der Rotormodule 27, 27' sowie der Rotorscheibe 26 bzw. des Rotors 2 als Ganzes deutlich reduziert werden.

Zwischen den Trägern 270 der Rotormodule 27, 27' sind Leitflächen 274 befestigt, deren Vorderkante bezogen auf den kompletten Rotor 2 entlang des Umfangs ausgerichtet sind und deren Fläche im Wesentlichen parallel zur Rotorachse 22 verläuft.

Die Leitflächen 274 sind somit dem bestimmungsgemäß anströmenden Wind nur minimal ausgesetzt und tragen maßgeblich zur Aussteifung der Rotormodule 27, 27' zwischen den Trägern 270 bei. Sie unterteilen die Rotorscheibe 26 jedoch in mehrere, konzentrische Ringe und sind vorzugsweise alle in etwa gleichbleibendem radialen Abstand zueinander verteilt.

Zwischen den Leitflächen 274 sind Strömungsflächen 272 angeordnet, deren Vorderkante radial zum kompletten Rotor 2 verläuft und die schräg zur Rotorachse 22 ausgerichtet sind. Aufgrund der Vielzahl der dargestellten Strömungsflächen 272 und Leitflächen 274 sind nur ausgewählte Exemplare in den Zeichnungen mit Bezugszeichen versehen.

Im gezeigten Ausführungsbeispiel der Erfindung sind die Strömungsflächen 272 und die Leitflächen 274 jeweils als Blechbiegeteile aus Flachblech, beispielsweise aus Aluminium, Stahl oder einem anderen geeigneten metallischen Werkstoff, gefertigt. Im Rahmen der Erfindung können jedoch ohne Beeinträchtigung des allgemeinen Erfindungsgedankens auch andere Materialien zum Einsatz kommen, beispielsweise thermoplastische Kunststoffe oder faserverstärkte Werkstoffe.

Dabei sind die Strömungsflächen 272 und/oder Leitflächen 274 im Rahmen der Erfindung beispielsweise als einstückige Bauteile ausgeführt, was insbesondere den Montageaufwand reduziert und die Anzahl der Bauteile insgesamt gering hält. Bei sehr großen Flächen, beispielsweise den radial äußeren Leitflächen 274, kann jedoch auch eine Ausführung aus mehreren Einzelbauteilen von Vorteil sein, die dann kleiner und dadurch einfacher zu fertigen sind.

Jeweils zwei benachbarte Strömungsflächen 272 und die zwei angrenzenden Leitflächen 274 bilden einen Strömungskanal, der in Umfangsrichtung des Rotors 2 schräg zur Rotorachse 22 verläuft. Durch die entsprechende Ablenkung des anströmenden Windes wird so ein Drehmoment erzeugt, dass zur Energiegewinnung zur Verfügung steht.

Die beiden exemplarischen Bautypen der Rotormodule 27, 27' unterscheiden sich dabei im Wesentlichen nur in der Verteilung der Strömungsflächen 272 und somit der Verteilung der Strömungskanäle über die Rotorscheibe 26. Dabei ist es insbesondere von Vorteil, wenn die Strömungskanäle alle etwa gleiche Querschnittsfläche aufweisen.

Dafür kann es in Einzelfällen vorteilhaft sein, dass einzelne Strömungsflächen 272 über die Träger 270 des einen Rotormoduls 27', wie in Fig. 3 dargestellt, hausragen und bei der Montage des Rotors 2 in entsprechende Freiräume des benachbarten Rotormoduls 27 geschoben werden.

### BEZUGSZEICHEN

- 1: Windenergieanlage
- 2: Rotor
- 3: Maschinenhaus
- 4: Turm
- 5: Fundament
- 20: Rotornabe
- 22: Rotorachse
- 24: Nabenkappe
- 26: Rotorscheibe
- 27, 27': Rotormodul
- 28: Spannseil
- 29: Stützstange
- 270: Träger
- 272: Strömungsfläche
- 274: Leitfläche

## Patentansprüche

1. Rotor (2) für eine Windenergieanlage (1) umfassend eine zentralen Rotornabe (20), die eine Rotorachse (22) vorgibt, und eine um die Rotornabe (20) herum angeordneten Rotorscheibe (26) mit einer Vielzahl von Strömungskanälen, wobei die Strömungskanäle jeweils durch Strömungsflächen (272) mit radial ausgerichteter Vorderkante und Leitflächen (274) mit in Umfangsrichtung angerichteter Vorderkante gebildet werden, wobei die Strömungsflächen (272) schräg zur Rotorachse (22) ausgerichtet sind, um bei Anströmung des Rotors (2) im Wind ein Drehmoment um die Rotorachse (22) zu bewirken,
**dadurch gekennzeichnet, dass**
die Rotorscheibe (26) aus im Wesentlichen kreissegmentförmigen Rotormodulen (27, 27') aufgebaut ist, wobei die Rotormodule (27, 27') jeweils an der Rotornabe (20) befestigt und benachbarte Rotormodule (27, 27') miteinander verbunden sind.

2. Rotor (2) gemäß Anspruch 1,
**dadurch gekennzeichnet, dass**
die Rotormodule (27, 27') wenigstens teilweise baugleich sind, wobei insbesondere für alle Rotormodule (27, 27') des Rotors (2) drei oder weniger unterschiedliche Bauformen vorgesehen sind.

3. Rotor (2) gemäß Anspruch 1 oder 2,
**dadurch gekennzeichnet, dass**
die Rotormodule (27, 27') jeweils randständige Träger (270) aufweisen, wobei benachbarte Rotormodule (27, 27') insbesondere über die Träger (270) miteinander verbunden sind.

4. Rotor (2) gemäß Anspruch 3,
**dadurch gekennzeichnet, dass**
jedes Rotormodul (27, 27') vier Träger (270) aufweist, die insbesondere als langgestreckte Trägerprofile ausgebildet sind.

5. Rotor (2) gemäß einem der Ansprüche 1 bis 4,
**dadurch gekennzeichnet, dass**
die Strömungsflächen (272) und/oder die Leitflächen (274) durch Flachbleche, insbesondere aus einem Metallwerkstoff, ausgebildet werden.

6. Rotor (2) gemäß einem der Ansprüche 1 bis 5,
**dadurch gekennzeichnet, dass**
die Rotormodule (27, 27') an der Rotornabe (20) durch geeignete Spannmittel (28) gesichert sind, um in Richtung der Rotorachse (22) auf die Rotormodule (27, 27') einwirkende Winddruckkräfte wenigstens teilweise aufzunehmen und an die Rotornabe (20) abzuleiten.

7. Windenergieanlage (1) mit einem Rotor (2) nach einem der Ansprüche 1 bis 6.

8. Windenergieanlage (1) gemäß Anspruch 7,
**dadurch gekennzeichnet, dass**
die Windenergieanlage (1) ein in bestimmungsgemäßer Anströmrichtung hinter dem Rotor (2) angeordnetes Maschinenhaus (3) umfasst, wobei die Rotornabe (20) einen Querschnitt aufweist, der größer ist als ein dem anströmenden Wind bestimmungsgemäß zugewandter Querschnitt des Maschinenhauses (3), wobei die Rotornabe (20) insbesondere eine strömungsleitende Vorderseite (24) aufweist, um den anströmenden Wind nach radial außen in den Bereich der Rotorscheibe (26) abzuleiten.

9. Rotormodul (27, 27') für einen Rotor (2) gemäß einem der Ansprüche 1 bis 6.
